# FASCICULE DE BREVET EUROPEEN

(11) **EP 2 804 906 B1**
(45) Date de publication et mention de la délivrance du brevet: **08.06.2016**
(21) Numéro de dépôt: 13705208.0
(22) Date de dépôt: 14.01.2013
(51) Int. Cl.: C08L 51/06, C08L 23/08, C08K 3/18, C09K 21/02, C09K 21/14, F16L 57/04, H01B 7/28, H01B 7/295, C08K 3/22, C08K 3/34, F16L 58/10, F16L 9/133

(54) **COMPOSITIONS THERMOPLASTIQUES IGNIFUGEES A HAUTE TENUE MECANIQUE, EN PARTICULIER POUR LES CABLES ELECTRIQUES**
FEUERFESTE WÄRMEHÄRTENDE ZUSAMMENSETZUNGEN MIT HOHER MECHANISCHER FESTIGKEIT, INSBESONDERE FÜR STROMKABEL
FIRE-RETARDANT THERMOPLASTIC COMPOSITIONS HAVING HIGH MECHANICAL STRENGTH, IN PARTICULAR FOR ELECTRIC CABLES

(30) Priorité: 17.01.2012 FR 1250434
(43) Date de publication de la demande: 26.11.2014
(73) Titulaire: Arkema France, 92700 Colombes (FR)
(72) Inventeur: LOERCH, Elisabeth, F-27170 Barc (FR); QUINEBECHE, Sébastien, 27300 Bernay (FR); PALLUAULT, Vincent, F-27300 Bernay (FR)
(74) Mandataire: Gavin, Pablo
(86) Numéro de dépôt international: PCT/FR2013/050081
(87) Numéro de publication internationale: WO 2013/107971

(56) Documents cités:
- EP-A1- 0 530 940
- WO-A1-2005/054361
- WO-A1-2010/142362
- FR-A1- 2 892 172

## Description

L'invention a pour objet des compositions ignifugées thermoplastiques à haute tenue mécanique, plus précisément à haute tenue mécanique quelque soient les conditions d'humidité relative, contenant au moins une association particulière de deux agents de couplage. La présente invention concerne également l'utilisation de cette composition en tant que couche de revêtement (couche extérieure) dans un câble, tuyau ou analogue ainsi qu'en tant que matériau constitutif (couche intérieure) d'une gaine de protection.

Ces compositions sont utiles en câblerie pour isoler et protéger des câbles électriques, des fibres optiques et pour la fabrication de pièces électriques telles que des connecteurs électriques, ainsi qu'en électrotechnique pour mouler des objets tels que des boîtiers. Dans les applications comme le recouvrement de câbles électriques, pièces électriques et électrotechniques, automobile, outre leur caractère isolant électrique, les matériaux doivent avant tout posséder de haut niveau de résistance au feu (ignifugation). Les installations électriques peuvent en effet être à l'origine de courts circuits et s'enflammer, elles peuvent être aussi mises au contact d'une flamme et donc s'enflammer et propager l'incendie le long des chemins de câbles.

Les polymères thermoplastiques tels que les polyéthylènes, les polyamides ou leurs mélanges sont de bons isolants électriques et sont faciles à mettre en oeuvre. Ils sont utilisés pour faire des boîtiers et des connecteurs électriques et aussi des revêtements de câbles.

Les qualités ignifuges d'une composition sont classiquement mesurées par le test de l'Indice Limite d'Oxygène ou LOI pour « Limiting Oxygen Index ». La mesure de l'indice limite d'oxygène permet de déterminer la concentration en oxygène minimale dans un mélange oxygène / azote qui permet d'entretenir la combustion d'un plastique en position vertical, avec un allumage en haut de l'échantillon. L'inflammabilité des matériaux est ainsi quantitativement caractérisée.

Pour un résultat au test LOI inférieur à 10%, la composition brûle très facilement. Pour des résultats au test LOI compris entre 21% et 30%, la composition brûle mais s'éteint d'elle-même après un laps de temps plus ou moins long. Dans le domaine de la câblerie, pour la couche ignifuge (un câble étant généralement formé d'une pluralité de couches parallèles), le résultat au test LOI ne doit pas être inférieur à 35%, ce qui correspond à une extinction spontanée ou immédiate de la combustion de la composition.

Il existe différents additifs pour rendre une matière plastique ininflammable, certains à base de produits halogénés, d'autres sans halogène.

L'utilisation de dérivés halogénés présente le grand inconvénient de conduire, lors de la combustion, à des gaz toxiques et corrosifs. Ainsi, comme cela est le cas dans le cadre de la présente invention, les fabricants et transformateurs se sont alors dirigés vers la mise au point de compositions contenant des oxydes, hydroxydes ou sels minéraux de métaux tels que les hydrates d'aluminium et de magnésie. L'ajout de ces matériaux confèrent des propriétés ignifuges mais dégradent les propriétés mécaniques de la composition thermoplastique les incluant.

Outre la résistance au feu, pré-requis pour ces compositions ignifuges en câblerie, ces compositions doivent présenter des qualités mécaniques optimums. Il est essentiel que ces bonnes propriétés mécaniques ne soient pas trop dégradées dans des conditions d'environnement difficile, plus précisément dans un milieu humide prolongé, auxquelles sont classiquement soumis par exemple les câbles extérieur ou les câbles de véhicules automobiles. Il est considéré généralement qu'une baisse de 30% des propriétés mécaniques, entre un environnement normal/sec et un environnement fortement humide, n'est pas acceptable pour une couche de composition (ignifuge) en câblerie.

Compte tenu notamment du fait que, pour les compositions thermoplastiques, l'amélioration des propriétés de résistance au feu va à l'encontre des propriétés mécaniques, il n'existe pas sur le marché, à l'heure actuelle, de matériaux ou compositions thermoplastiques présentant des caractéristiques de hautes performances pour l'ensemble de ces propriétés combinées (propriétés mécaniques et ignifuges) et surtout qui conservent ces propriétés quelque soient le niveau d'humidité ambiant et la durée d'exposition à ces conditions.

### Etat de l'art

On connaît le document KR 20100113750 qui décrit une composition thermoplastique ignifugée constituée de 100 parties en poids d'éthylène acétate de vinyle, 1 à 5 parties en poids d'un terpolymère éthylène / acrylate / anhydride maléique, 10 à 15 parties en poids d'un copolymère anhydride maléique linéaire greffé à faible densité d'éthylène, 90 à 150 parties en poids d'hydroxyde de magnésium, 3 à 10 parties en poids de composés silicone à poids moléculaire élevé, et de 1 à 5 parties en poids d'un mélange maître incluant une résine et du phosphore rouge. Cette composition complexe et difficile à mettre en oeuvre semble afficher de bonnes propriétés mécaniques et permettre d'abaisser la densité de fumée pendant un feu.

On connaît le document WO 2005/054361 qui divulgue l'association de deux produits, à savoir un mélange d'un copolymère de l'éthylène non fonctionnalisé et d'un copolymère fonctionnalisé. Ce document divulgue le fait que les deux copolymères sont obtenus par copolymérisation, en excluant expressément l'éventualité d'un greffage pour apporter la partie fonctionnalisé, de sorte que les propriétés physico-chimiques de ce mélange sont très particulières et non satisfaisantes dans les applications recherchées ici.

Dans le même domaine, on connaît les documents EP 0530940, EP 0998528, EP 2275477 et WO 2010033396.

On connaît également des compositions contenant des polyéthylènes greffés anhydride maléique qui présentent de bonnes propriétés mécaniques et des résultats satisfaisants au test LOI mais une chute drastique des propriétés mécaniques en condition humide ou lors du vieillissement.

On connaît aussi des compositions contenant des terpolymères d'éthylène, d'acrylate de butyle et d'anhydride maléique, qui présentent une fluidité intéressante ainsi qu'une bonne tenue aux variations d'humidité relative et au vieillissement mais des propriétés mécaniques plus faibles.

### Brève description de l'invention

Après expérimentations, la demanderesse a découvert, de façon surprenante, qu'une composition associant, dans des proportions particulières, d'une part un terpolymère éthylène-acrylate-anhydride maléique et d'autre part un polyéthylène greffé anhydride maléique présente un effet synergique extrêmement intéressant quant au maintien des performances mécaniques quelque soient les conditions d'humidité environnante (autrement dit en condition d'humidité importante/élevée), tout en préservant les autres propriétés de la composition.

La présente invention entend ainsi remédier à la baisse catastrophique des propriétés mécaniques des matériaux de l'art antérieur, placés en milieu fortement humide, en proposant une composition thermoplastique répondant à l'ensemble des exigences spécifiques aux câbles électriques, aux fibres optiques et plus généralement aux pièces isolantes dans les domaines électriques et électrotechniques.

On entend ici par propriétés mécaniques essentiellement la contrainte à la rupture et l'allongement à la rupture.

La demanderesse a ainsi découvert un nouvel agent de couplage d'une composition ignifugée thermoplastique comprenant un polyéthylène greffé anhydride maléique présentant un point de fusion supérieur à 115°C (Celsius), caractérisé en ce que cet agent de couplage comprend en outre un terpolymère éthylène-acrylate-anhydride maléique, la proportion dudit terpolymère représentant de 33 % à 99,5 % en poids du mélange formant l'agent de couplage.

Selon un mode d'exécution avantageux, l'agent de couplage selon l'invention consiste (uniquement) en ces deux composants, à savoir le polyéthylène greffé anhydride maléique et le terpolymère éthylène-acrylate-anhydride maléique.

De préférence, la proportion du terpolymère représente de 34 % à 67 % en poids du mélange. De façon encore plus préférée, la proportion du terpolymère représente de 45 % à 55 % en poids du mélange.

Avantageusement, le susdit terpolymère est un terpolymère d'éthylène, d'acrylate de butyle et d'anhydride maléique.

De façon préférée, le susdit polyéthylène greffé anhydride maléique est un polyéthylène linéaire basse densité.

L'invention se rapporte également à une composition thermoplastique comprenant, pour au moins 90% en poids de la composition :
- de 35% à 70% en poids de charges minérales ignifugeantes,
- de 0% à 45% en poids d'un copolymère d'éthylène et d'un monomère éthylénique portant une fonction polaire,
- de 0% à 45% de polyéthylènes, au moins l'un des deux composants, ledit copolymère ou ledit polyéthylène, étant présent dans la composition,
caractérisée en ce qu'elle comprend de 0,1% à 10% en poids de l'agent de couplage défini ci-dessus.

Avantageusement, ledit agent de couplage est présent dans la composition entre 2 % et 7,5 %.

Préférentiellement, le monomère éthylénique portant une fonction polaire comprend de 3 à 20 atomes de carbone, préférentiellement de 4 à 8 atomes.

Avantageusement, le monomère éthylénique portant une fonction polaire est choisi parmi les esters vinyliques d'acide carboxylique saturé, les acides carboxyliques insaturés ou les esters (méth)acryliques d'acide carboxylique insaturé.

Avantageusement, la composition comprend jusqu'à 10% en poids d'additifs, à savoir des antioxydants, des anti U.V., des lubrifiants, des agents antistatiques, des charges minérales, des pigments de coloration, des agents anti-gouttes (produits à base de silicone (PDMS) ou des produits fluorés comme le PTFE) et/ou des zéolithes.

La présente invention concerne plus particulièrement un câble ou tuyau présentant au moins deux couches dont au moins une couche est formée par la susdite composition thermoplastique tel qu'énoncée ci-dessus.

### Brève description des figures

D'autres détails et caractéristiques avantageuses de l'invention ressortent de la description détaillée faite ci-après en référence aux figures annexées qui montrent :
- la Figure 1 projette le tableau de résultats, présenté ci-après, concernant le test d'allongement à la rupture, dans un environnement à 50 % d'humidité relative, pour l'ensemble des éprouvettes ;
- la Figure 2 projette le tableau de résultats, présenté ci-après, concernant la variation maximum d'allongement à la rupture (en %) entre un environnement sec (humidité relative égale ou proche de 0 %), un environnement à 50% d'humidité relative et un environnement saturé en humidité (humidité relative égale ou proche de 100%) ;

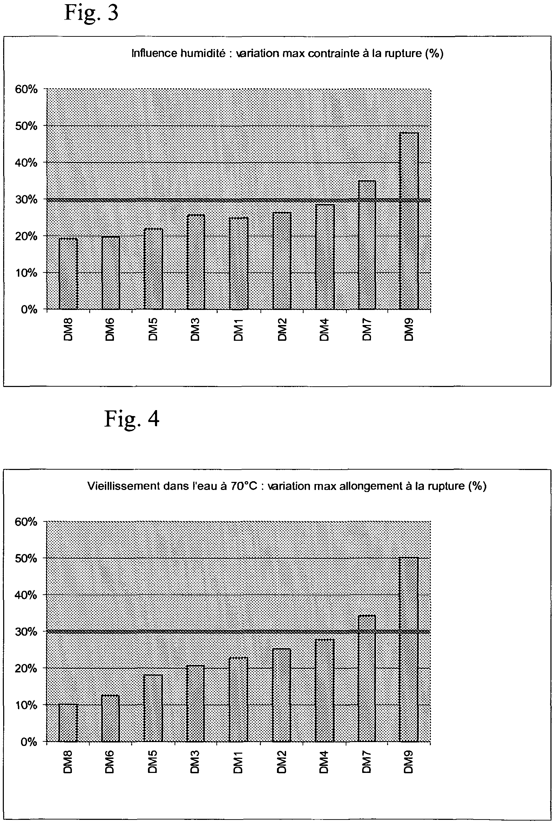

- la Figure 3 projette le tableau de résultats, présenté ci-après, concernant la variation maximum de la contrainte à la rupture (en %) entre un environnement sec (humidité relative égal ou proche de 0 %), un environnement à 50% d'humidité relative et un environnement saturé en humidité (humidité relative égale ou proche de 100%) ;
- la figure 4 projette le tableau de résultats, présenté ci-après, concernant le vieillissement dans l'eau à 70° Celsius pour le test d'allongement à la rupture entre le résultat initial comparé au résultat après 7 jours (168 heures) ;

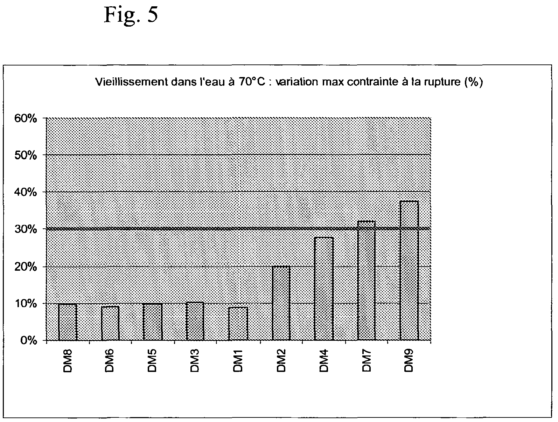

- la figure 5 projette le tableau de résultats, présenté ci-après, concernant le vieillissement dans l'eau à 70° Celsius pour le test de contrainte à la rupture entre le résultat initial comparé au résultat après 7 jours (168 heures).

### Description détaillée de l'invention

S'agissant du polyéthylène greffé anhydride maléique, on entend par polyéthylène des homo- ou copolymères.

A titre de comonomères, on peut citer les alpha-oléfines, avantageusement celles ayant de 3 à 30 atomes de carbone. Des exemples ont été cités plus haut. Ces alpha-oléfines peuvent être utilisées seules ou en mélange de deux ou de plus de deux.

Le polyéthylène peut comprendre plusieurs des comonomères précédents.

Avantageusement le polyéthylène qui peut être un mélange de plusieurs polymères, comprend au moins 50% et de préférence 75% (en moles) d'éthylène, sa densité peut être comprise entre 0.910 et 0,96 g/cm³. Le MFI (« Melt Flow Index », indice de viscosité mesuré à 190°C sous une charge de 2,16 kg) est compris avantageusement entre 1 et 1000 g/10 min.

A titre d'exemple de polyéthylènes on peut citer :
- le polyéthylène haute densité (HDPE)
- le polyéthylène moyenne densité (MDPE)
- le polyéthylène linéaire basse densité (LLDPE)
- le polyéthylène obtenu par catalyse métallocène.

Le greffage de l'anhydride maléique sur le polyéthylène est une opération connue en soi par l'homme du métier. Le taux de greffage de l'anhydride maléique, c'est-à-dire le nombre d'unités de monomère d'anhydride maléique dans le polymère greffé, est variable suivant le polyéthylène considéré et peut varier de 0,1% à 4% en poids, préférentiellement de 0,4% à 2% en poids du polymère greffé.

Il doit être noté ici que le fait que le polyéthylène greffé anhydride maléique présente « un point de fusion supérieur à 115°C (Celsius) » est directement lié au choix du polyéthylène formant la chaine longue de ce polymère. De ce fait, seuls certains polyéthylènes peuvent être choisis pour la présente invention.

S'agissant du terpolymère éthylène-(méth)acrylate d'alkyle-anhydride maléique, on utilise avantageusement le terpolymère éthylène-acrylate-anhydride maléique mais on pourra également envisager un terpolymère éthylène-acétate de vinyle-anhydride maléique.

Ces polyéthylènes greffés et terpolymères sont commercialisés par la demanderesse sous les marques OREVAC^{®} et LOTADER^{®}.

L'agent de couplage peut être préparé en mélangeant les différents constituants par les moyens classiques de mise en oeuvre des thermoplastiques comme par exemple l'extrusion ou le malaxage. On peut utiliser des mélangeurs internes à pâles ou à rotors, un mélangeur externe, un co-malaxeur, des extrudeuses mono-vis, bi-vis co-rotatives ou bi-vis contra-rotatives. Préférentiellement, l'agent de couplage est réalisé à une température supérieure ou égale à la température de fusion des constituants. L'agent de couplage peut être réalisé par exemple à une température comprise dans la gamme allant de 100 à 260°C.

S'agissant du copolymère d'éthylène et d'un monomère éthylénique portant une fonction polaire, on entend par monomère éthylénique, un monomère comprenant une insaturation susceptible de réagir avec l'éthylène dans un procédé par voie radicalaire. Par fonction polaire, on entend une fonction présentant un moment dipolaire, tel que les fonctions amine, alcool, uréthane, acide ou ester. Préférentiellement, la fonction polaire est une fonction acide ou une fonction ester.

Le monomère éthylénique portant une fonction polaire comprend préférentiellement de 3 à 20 atomes de carbone, préférentiellement de 4 à 8 atomes de carbone.

A titre d'exemple de copolymère, on peut citer les copolymères d'éthylène et d'un ester vinylique d'acide carboxylique, les copolymères d'éthylène et d'un acide carboxylique insaturé ou encore les copolymères d'éthylène et d'un acrylate et ou d'un méthacrylates d'alkyle, regroupés dans la présente demande sous le terme (méth)acrylate d'alkyle. Avantageusement, le monomère éthylénique peut être choisi parmi l'acétate de vinyle et les (méth)acrylates de méthyle, d'éthyle ou de butyle.

La quantité massique en monomère éthylénique par rapport à la masse totale du copolymère peut être comprise dans la gamme allant de 1 à 70%, avantageusement de 10 à 60% et préférentiellement de 20 à 45%.

Selon l'invention, les quantités des différents monomères présents dans le copolymère peuvent être mesurées par spectroscopie infrarouge en utilisant la norme ISO8985 (1998). La température de ramollissement du copolymère peut être mesurée par la Norme ASTM E 28-99(2004).

On peut utiliser les procédés dits de polymérisation radicalaire fonctionnant habituellement à des pressions entre 200 et 2 500 bars. Ces procédés sont mis en oeuvre industriellement en utilisant deux types principaux de réacteurs : un réacteur de type autoclave ou un réacteur de type tubulaire. Ces procédés de polymérisation connus de l'homme du métier et on peut utiliser par exemple les procédés décrits dans les documents FR2498609, FR2569411 et FR2569412. L'homme du métier sait dans quelles proportions utiliser chacun des monomères pour obtenir le copolymère (a) utilisé dans l'invention.

Ces copolymères sont commercialisés par la demanderesse sous les marques EVATANE^{®} et LOTRYL^{®}.

S'agissant de l'agent ignifugeant, dans le cadre des exemples choisis pour illustrer l'invention, c'est-à-dire la réalisation des tests des compositions selon l'invention au regard de celles selon l'art antérieur, il a été choisi deux retardateurs de flamme (ignifugeant) inorganiques classiquement utilisés, à savoir le trihydrate d'aluminium (ATH) et, éventuellement en remplacement ou en complément, l'hydroxyde de magnésium (MDH).

Les ignifugeants inorganiques sont ainsi préférés dans la composition selon l'invention.

Néanmoins, on pourra également considérer que l'agent ignifugeant répond à la définition des composés susceptibles de former au moment de la combustion des acides tels que H₃PO₄ (acide orthophosphorique), (HPO₃)ₙ (acide métaphosphorique) et H₄P₂O₇ (acide pyrophosphorique). A titre d'illustration de tels agents, on peut citer les phosphates, les phosphinates, les pyrophosphates et les polyphosphates d'ammonium, les phosphates de mélamine, le phosphite de mélamine, le phosphite et le diphosphite de pipérazine, le phosphate de guanazole, le pyrophosphate de mélamine et le pyrophosphate de pipérazine.

On peut utiliser également les polyphosphates d'ammonium, qui sont des polymères en chaîne simple de formule générale (NH₄)ₙ₊₂ PₙO₃ₙ₊₁, dans laquelle n représente un nombre entier supérieur ou égal à 2. Le polyphosphate d'ammonium peut être encapsulé dans une résine à base de mélamine. On ne sortirait pas du cadre de l'invention en utilisant un mélange des agents ignifugeants précités. L'agent ignifugeant peut être fonctionnalisé, par exemple il peut porter des fonctions silanes.

L'ignifugeant de la composition selon l'invention pourra également consister en un retardateur de flamme contenant de l'azote. Il sera alors choisi parmi la mélanine pure, des dérivés de mélamine comme des sels d'acides organiques ou inorganiques tels que l'acide borique, l'acide cyanurique, l'acide phosphorique ou l'acide pyro- / polyphosphorique, les homologues de la mélamine comme le melam ou le melem.

L'ignifugeant de la composition pourra consister en des composés contenant du bore (borates, mélanges d'acides boriques et de borax, borate de zinc...), le trioxyde d'antimoine, des composés de zinc (sulfures de zinc, hydroxystannate de zinc...), des mélanges intumescents (par exemple mélange de polyphosphates d'ammonium, pentaérythritol, dérivés de la mélanine), du graphite expansible ou des nanocomposites (par exemple argile de silicates d'aluminium comme la montmorillonite).

On notera enfin que la composition selon l'invention comprend éventuellement du phosphore rouge, classiquement utilisé en mélange dans les polyoléfines.

Ainsi, l'ignifugeant de la composition selon l'invention est l'un des produits susvisés ou une combinaison de ces produits.

S'agissant du polyéthylène présent dans la composition, on entend par polyéthylène tous les polyéthylènes envisageables dans la définition susmentionnée de « polyéthylène » dans le cadre du polyéthylène greffé anhydride maléique.

### Préparation de la composition :

Les compositions selon l'invention peuvent être préparées selon deux procédés différents.

On peut les préparer selon un procédé en deux étapes : dans une première étape, on prépare d'abord l'agent de couplage en mélangeant simplement les deux composés. Puis, dans une seconde étape, on mélange à l'état fondu l'agent de couplage précédemment préparé avec les additifs ignifugeants, par exemple du trihydrate d'aluminium et/ou du dihydroxide de magnésium, le copolymère d'éthylène et d'un monomère éthylénique portant une fonction polaire ainsi que le polyéthylène. On notera que le susdit copolymère peut être absent de la composition, tout comme le polyéthylène, mais il n'est pas possible de ne pas avoir au moins l'un de ces deux composants dans une composition selon l'invention ; l'agent de couplage ayant notamment pour fonction de lier ledit copolymère et/ou le polyéthylène avec les charges ignifugeantes.

On peut aussi préparer les compositions selon l'invention selon un procédé en une étape au cours de laquelle on mélange les ingrédients pour donner une composition homogène et réaliser les éventuelles réactions chimiques entre composants. Ces compositions peuvent être préparées en mélangeant les différents constituants par les moyens classiques de mise en oeuvre des thermoplastiques fortement chargés comme par exemple l'extrusion ou le malaxage. On peut utiliser un mélangeur interne, un co-malaxeur ou une extrudeuse bi-vis co-rotative. Préférentiellement, les compositions sont réalisées à une température supérieure ou égale à la température de fusion des constituants et inférieure à la température de début de décomposition de l'agent ignifugeant.

Des charges, en particulier minérales, peuvent être ajoutées pour améliorer la tenue thermomécanique de la composition. De façon non limitative, on donnera comme exemples la silice, l'alumine, le talc ou les carbonates de calcium ou les nanotubes de carbone. Avantageusement, on utilise des argiles modifiées ou non modifiées qui sont mélangées à l'ordre nanométrique ; ceci afin de satisfaire les exigences de certaines normes d'inflammabilité des matières plastiques, telle que l'UL94-V0 (auto-extinguible en 10 secondes maximum, sans goutte enflammée).

Des plastifiants peuvent être ajoutés afin de faciliter la mise en oeuvre et améliorer la productivité du procédé de fabrication de la composition et des structures. On peut citer comme exemples les huiles minérales paraffiniques aromatiques ou naphtaléniques. On peut également citer comme plastifiant les phtalates, azelates, adipates, le phosphate de ticrésyle.

On ne sortirait pas non plus du cadre de l'invention si on ajoutait aux compositions des agents « anti gouttes » comme des produits à base de silicone (PDMS) ou des produits fluorés comme le PTFE.

### Obtention des formulations testées :

Les formulations décrites ci-dessous sont préparées par extrusion grâce à un co-malaxeur de marque BÜSS PR46 de diamètre 46 millimètres, de longueur 15 fois son diamètre et équipé d'une mono-vis de reprise de diamètre 70 millimètres. La vis et les fourreaux du co-malaxeur sont chauffés respectivement à 100°C et 110°C alors que la mono-vis de reprise est chauffée à 150°C. Le débit d'extrusion est de 15kg/h (kilogrammes par heure) pour une vitesse de rotation du co-malaxeur de 285 trs/min (tours par minute). Les différents constituants (à l'exception de la charge ignifugeante) sont introduits dans la première trémie (trémie 1), la charge ignifugeante est introduite à parts égales dans les trémies 1 et 2.

L'agent de couplage est ici défini comme le coeur de l'invention et il est plus particulièrement destiné à être utilisé dans une composition formant revêtement de câble électrique.

Outre cette application en câblerie, l'agent de couplage selon l'invention ainsi que la composition l'incorporant trouvent d'autres applications où leurs caractères de résistances au feu et leurs bonnes propriétés mécaniques sont requis. Ces agents de couplage et compositions ont l'avantage d'être transformables en articles industriels (feuilles, plaques, profilés, corps creux, tuyaux), présentant une résistance au feu améliorée, par les techniques classiques de transformation des polyoléfines (extrusion, injection, roto-moulage).

### Matériaux employés pour former les formulations testées :

**Lotader® 3210 :** Terpolymère d'éthylène, d'acrylate de butyle (6% poids) et d'anhydride maléique (3% poids) produit par ARKEMA possédant un MFI (190°C, 2.16 kg mesuré selon ISO 1133) de 5 g/10mn.
**ATH :** Trihydrate d'aluminium possédant une surface spécifique de 4m²/g.
**Orevac® 18340 :** Polyéthylène linéaire basse densité greffé anhydride maléique, produit par ARKEMA possédant un MFI (190°C, 2.16kg mesuré selon ISO 1133) de 3 g/10mn.
**Evatane® 28-03 :** Copolymère d'éthylène et d'acétate de vinyle (28% en poids) produit apr ARKEMA possédant un MFI (190°C, 2,16kg mesuré selon ISO 1133) de 3 g/10mn.
**Polyéthylène :** Polyéthylène linéaire de basse densité possédant un MFI (190°C, 2,16kg mesuré selon ISO 1133) de 1 g/10mn.
**Antioxydant :** Antioxydant par exemple de type phénolique.

La présente invention est illustrée plus en détail par les exemples non limitatifs suivants. Les compositions ci-dessous comportent exactement les mêmes composants en pourcentage massique par rapport à la composition totale (exemples 1 à 6), à savoir 22,75% d'Evatane 28-03 + 9% polyéthylène + 63% ATH + 0,25% Antioxydant + 5% Agent de couplage.

Bien entendu, pour toutes les compositions testées, le taux ou pourcentage massique de l'agent de couplage (quelque soit sa formulation intrinsèque) dans la composition est identique afin de ne pas fausser les résultats des tests.

On doit noter par ailleurs que l'agent de couplage selon l'invention a présenté des résultats satisfaisants, au regard de sa fonction première d'amélioration de la mixtion des composants mais également au regard des propriétés avantageuses qu'il confère à la composition, lorsqu'il est présent entre 0,1 % et 10 % en poids de la composition, et de façon préférée entre 2 % et 7,5 %.
Exemple 1 : la composition intitulée « DM 1 » est une formulation entrant dans le cadre de la présente invention. Elle comprend, en pourcentage massique uniquement de l'agent de couplage, 50 % de Lotader 3210 et 50 % d'Orevac 18340.
Exemple 2 : la composition intitulée « DM2 » est une formulation entrant dans le cadre de la présente invention. Elle comprend, en pourcentage massique uniquement de l'agent de couplage, 44 % de Lotader 3210 et 56 % d'Orevac 18340.
Exemple 3 : la composition intitulée « DM3 » est une formulation entrant dans le cadre de la présente invention. Elle comprend, en pourcentage massique uniquement de l'agent de couplage, 56 % de Lotader 3210 et 44 % d'Orevac 18340.
Exemple 4 : la composition intitulée « DM4 » est une formulation entrant dans le cadre de la présente invention. Elle comprend, en pourcentage massique uniquement de l'agent de couplage, 35 % de Lotader 3210 et 65 % d'Orevac 18340.
Exemple 5 : la composition intitulée « DM5 » est une formulation entrant dans le cadre de la présente invention. Elle comprend, en pourcentage massique uniquement de l'agent de couplage, 65 % de Lotader 3210 et 35 % d'Orevac 18340.
Exemple 6 : la composition intitulée « DM6 » est une formulation entrant dans le cadre de la présente invention. Elle comprend, en pourcentage massique uniquement de l'agent de couplage, 94 % de Lotader 3210 et 6 % d'Orevac 18340.
   Par ailleurs, pour comparer les exemples de l'invention vis-à-vis d'autres compositions thermoplastiques (exemples 8 et 9) ignifuges mais également pour déterminer les proportions respectives des deux composants formant l'agent de couplage (exemple 7), les exemples suivants de composition ont été proposés pour les tests.
Exemple 7 : La composition intitulée « DM7 » est une formulation comportant, en pourcentage massique uniquement de l'agent de couplage, 30 % de Lotader 3210 et 70 % d'Orevac 18340.
Exemple 8 : la composition intitulée « DM8 » est une formulation, en pourcentage massique uniquement de l'agent de couplage, comportant 100% de Lotader 3210.
Exemple 9 : la composition intitulée « DM9 » est une formulation, en pourcentage massique uniquement de l'agent de couplage, comportant 100% d'Orevac 18340.

### Tests effectués sur les matériaux :

Les granulés ou composants sont mis en forme grâce à une extrudeuse double vis contra-rotative de laboratoire de type ThermoHaake Rheocord System 40 équipée d'une filière plate ; l'extrudeuse étant chauffée à 150°C pour obtenir des bandes à partir desquelles seront découpées les éprouvettes nécessaires afin de caractériser ou tester les matériaux.

Les premiers tests présentent les propriétés mécaniques des différents matériaux testés, en terme d'allongement et de contrainte à la rupture, mesurées selon la norme ISO R527 : 93-1BA, après conditionnement de ces matériaux pendant 48H dans un milieu sec avec HR = 0 ou proche de 0 (HR : Humidité Relative), dans un milieu présentant 50% d'humidité relative (HR = 50) ou dans un milieu très humide (HR = 100% ou proche de 100%).

Le second test s'intéresse à l'évolution de l'allongement et de la contrainte à la rupture en réalisant un test, toujours selon la norme ISO R527 : 93-1BA, à l'état initial puis après avoir été plongé 7 jours dans de l'eau à 70°C.

Les derniers tests considèrent l'indice de fluidité (MFI), mesuré selon la norme ASTM D1238, ainsi que l'indice limite d'oxygène (LOI), mesuré selon la norme ASTM D2863 ou BS ISO 4589-2.

Tous ces tests sont réalisés de façon classique en prenant des éprouvettes standards de forme identique pour chaque composition testée et en leur faisant subir chaque test sur banc d'essai, selon les définitions (forme, dimensions, vitesses d'essai, étalonnage de la machine, exactitude des appareils etc.) données par les normes internationales et bien connues de l'homme du métier.

### Résultats des tests réalisés sur les éprouvettes des différentes formulations :

Sur les résultats montrés dans le tableau ci-dessous, les éprouvettes DM7 et DM9 ne donnent pas satisfaction car les variations de propriétés mécaniques (allongement à la rupture et contrainte à la rupture) sont supérieures au seuil limite (d'acceptabilité) de 30%.

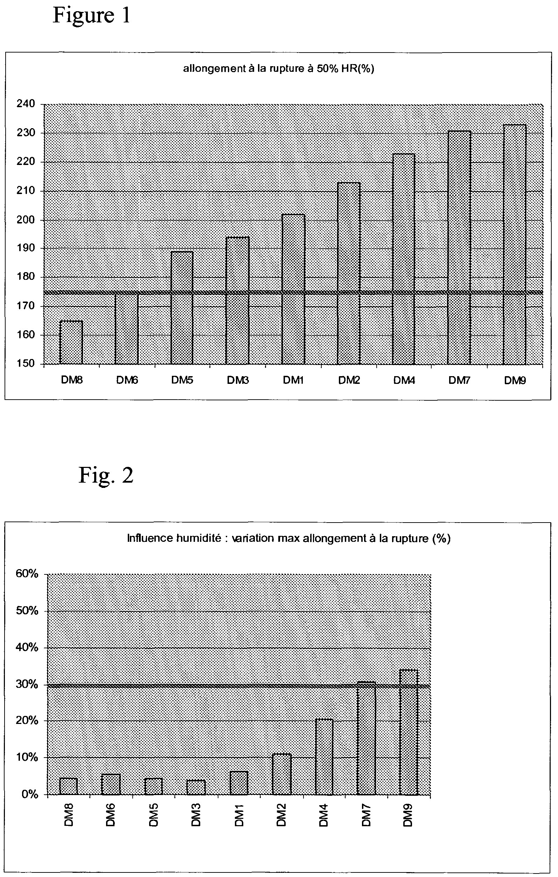

Concernant l'éprouvette DM8, le test d'allongement à la rupture à 50 % d'humidité n'est absolument pas satisfaisant puisque sa valeur est très inférieure à 175 % qui constitue un seuil d'acceptabilité pour ce test (visible en caractère gras sur la figure 1).

Seules les éprouvettes contenant l'agent de couplage selon l'invention présentent des propriétés mécaniques satisfaisantes (à 50% d'humidité relative) et stables en milieu humide (inférieure au seuil de 30 % de variation de ces propriétés mécaniques après un séjour prolongé en milieu humide).

On notera par ailleurs que ces tests permettent d'identifier des domaines privilégiés pour les résultats, à savoir que les résultats de DM1 sont supérieurs à ceux de DM2 ou DM3, ces derniers étant meilleurs que les résultats des éprouvettes DM4, DM5 et DM6.

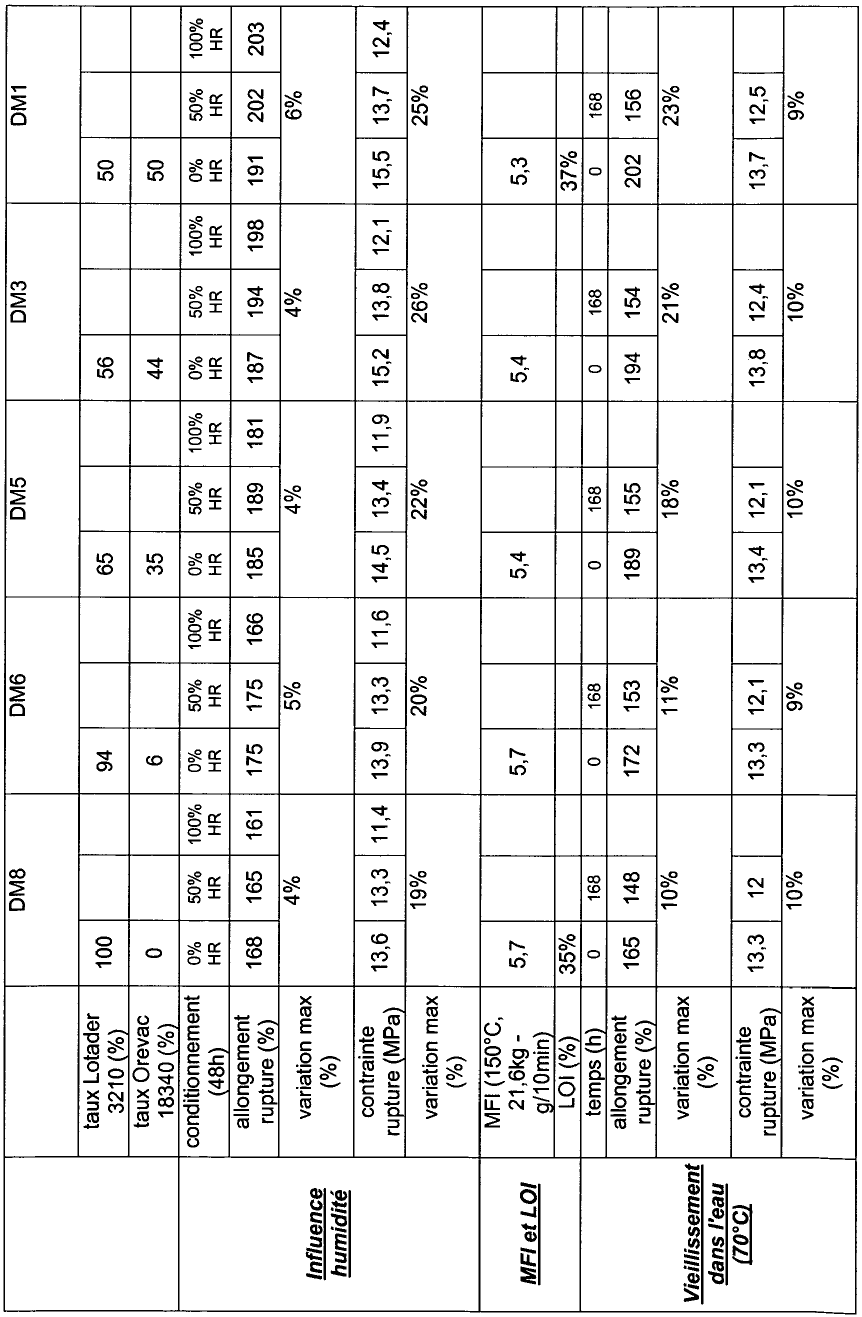

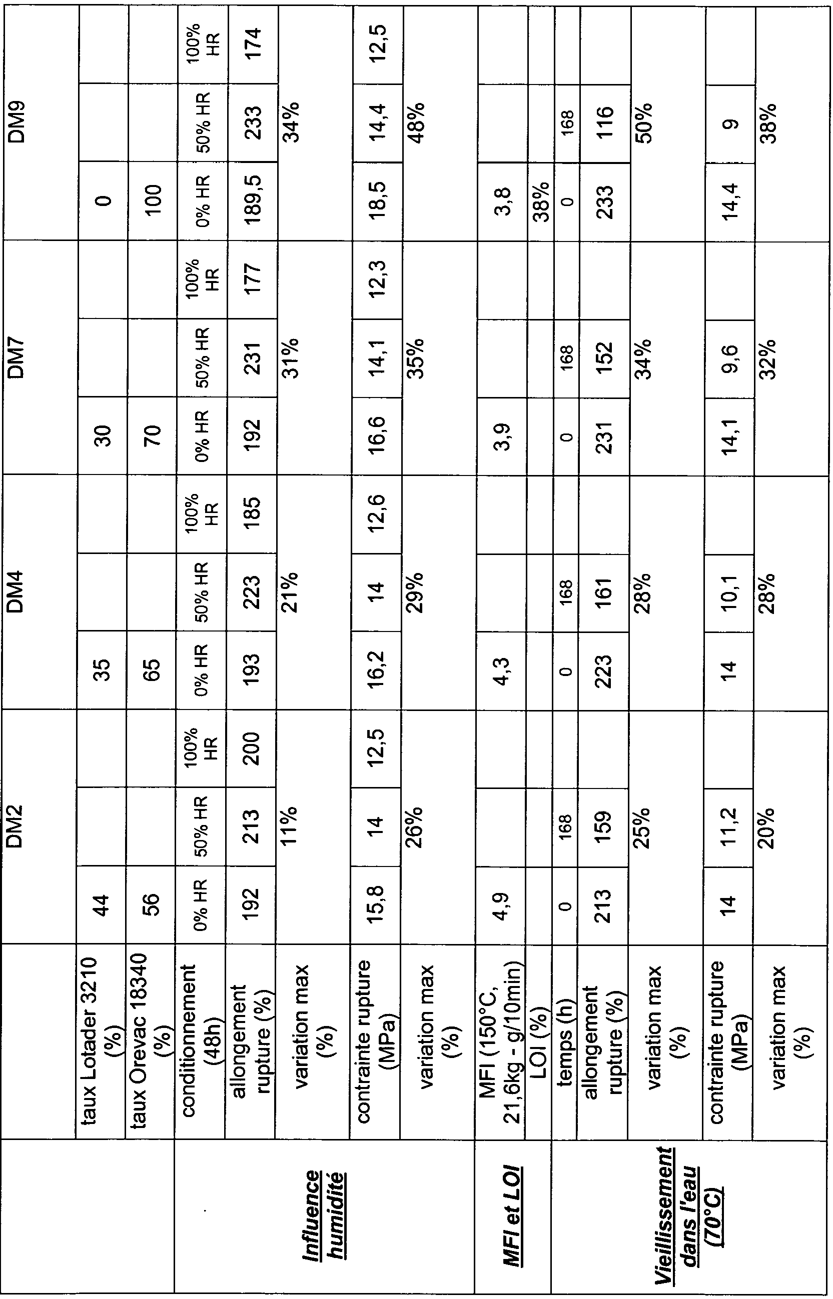

## Revendications

1. Agent de couplage d'une composition ignifugée thermoplastique comprenant un polyéthylène greffé anhydride maléique présentant un point de fusion supérieur à 115°C (Celsius), **caractérisé en ce qu'**il comprend en outre un terpolymère éthylène-acrylate-anhydride maléique, la proportion dudit terpolymère représentant de 33 % à 99,5 % en poids du mélange formant agent de couplage.

2. Agent de couplage selon la revendication 1, **caractérisée en ce que** l'agent de couplage consiste en le susdit polyéthylène greffé anhydride maléique et le susdit terpolymère éthylène-acrylate-anhydride maléique.

3. Agent de couplage selon les revendications 1 ou 2, **caractérisée en ce que** la proportion du terpolymère représente de 34 % à 67 % en poids du mélange.

4. Agent de couplage selon l'une quelconque des revendications précédentes, **caractérisée en ce que** la proportion du terpolymère représente de 45% à 55% en poids du mélange.

5. Agent de couplage selon l'une quelconque des revendications précédentes, **caractérisée en ce que** le susdit terpolymère est un terpolymère d'éthylène, d'acrylate de butyle et d'anhydride maléique.

6. Agent de couplage selon l'une quelconque des revendications précédentes, **caractérisée en ce que** le susdit polyéthylène greffé anhydride maléique est un polyéthylène linéaire basse densité.

7. Composition thermoplastique ignifugée sans halogène **caractérisée en ce qu'**elle comprend, pour au moins 90% en poids de la composition :
- de 35% à 70% en poids de charges ignifugeantes,
- de 0% à 45% en poids d'un copolymère d'éthylène et d'un monomère éthylénique portant une fonction polaire,
- de 0% à 45% de polyéthylènes,
- au moins l'un des deux composants, ledit copolymère ou ledit polyéthylène, étant présent dans la composition,
**caractérisée en ce que** ladite composition comprend entre 0,1 et 10% de l'agent de couplage selon l'une quelconque des revendications 1 à 6.

8. Composition selon la revendication 7, **caractérisée en ce que** ledit agent de couplage est présent dans la composition entre 2 % et 7,5 % en poids de la composition.

9. Composition selon la revendication 7 ou 8, **caractérisée en ce que** le monomère éthylénique portant une fonction polaire comprend de 3 à 20 atomes de carbone, préférentiellement de 4 à 8 atomes.

10. Composition selon l'une des revendications 7 à 9, **caractérisée en ce que** le monomère éthylénique portant une fonction polaire est choisi parmi les esters vinyliques d'acide carboxylique saturé, les acides carboxyliques insaturés ou les esters (méth)acryliques d'acide carboxylique insaturé.

11. Composition selon l'une quelconque des revendications 7 à 10, **caractérisée en ce que** la composition comprend jusqu'à 10% en poids d'additifs, en particulier des antioxydants, des anti U.V., des lubrifiants, des agents antistatiques, des charges minérales, des pigments de coloration, des zéolithes et/ou des agents « anti gouttes » (produits à base de silicone (PDMS) ou des produits fluorés comme le PTFE).

12. Composition selon l'une quelconque des revendications 7 à 11, **caractérisée en ce que** l'agent ignifugeant est une charge minérale, en particulier le trihydrate d'aluminium et/ou l'hydroxyde de magnésium.

13. Câble ou tuyau présentant au moins deux couches dont au moins une couche est formée par la susdite composition thermoplastique selon l'une quelconque des revendications 7 à 12.

## Patentansprüche

1. Haftvermittler für eine thermoplastische flammwidrige Zusammensetzung, umfassend ein mit Maleinsäureanhydrid gepfropftes Polyethylen mit einem Schmelzpunkt von mehr als 115°C (Celsius), **dadurch gekennzeichnet, dass** er außerdem ein Ethylen-Acrylat-Maleinsäureanhydrid-Terpolymer umfasst, wobei der Anteil des Terpolymers 33 bis 99,5 Gew.-% der den Haftvermittler bildenden Mischung ausmacht.

2. Haftvermittler nach Anspruch 1, **dadurch gekennzeichnet, dass** der Haftvermittler aus dem mit Maleinsäureanhydrid gepfropften Polyethylen und dem Ethylen-Acrylat-Maleinsäureanhydrid-Terpolymer besteht.

3. Haftvermittler nach Anspruch 1 oder 2, **dadurch gekennzeichnet, dass** der Anteil des Terpolymers 34 bis 67 Gew.-% der Mischung ausmacht.

4. Haftvermittler nach einem der vorhergehenden Ansprüche, **dadurch gekennzeichnet, dass** der Anteil des Terpolymers 45 bis 55 Gew.-% der Mischung ausmacht.

5. Haftvermittler nach einem der vorhergehenden Ansprüche, **dadurch gekennzeichnet, dass** es sich bei dem Terpolymer um ein Terpolymer von Ethylen, Butylacrylat und Maleinsäureanhydrid handelt.

6. Haftvermittler nach einem der vorhergehenden Ansprüche, **dadurch gekennzeichnet, dass** es sich bei dem mit Maleinsäureanhydrid gepfropften Polyethylen um ein lineares Polyethylen niederer Dichte handelt.

7. Halogenfreie flammwidrige thermoplastische Zusammensetzung, **dadurch gekennzeichnet, dass** sie für mindestens 90 Gew.-% der Zusammensetzung:
- 35 bis 70 Gew.-% flammhemmende Füllstoffe,
- 0 bis 45 Gew.-% eines Copolymers von Ethylen und einem ethylenischen Monomer mit einer polaren Funktion,
- 0 bis 45 Gew.-% Polyethylene,
- wobei mindestens eine der beiden Komponenten, das Copolymer oder das Polyethylen, in der Zusammensetzung vorliegt,
umfasst, **dadurch gekennzeichnet, dass** die Zusammensetzung zwischen 0,1 und 10% Haftvermittler nach einem der Ansprüche 1 bis 6 umfasst.

8. Zusammensetzung nach Anspruch 7, **dadurch gekennzeichnet, dass** der Haftvermittler in der Zusammensetzung in einer Menge zwischen 2 und 7,5 Gew.-% der Zusammensetzung vorliegt.

9. Zusammensetzung nach Anspruch 7 oder 8, **dadurch gekennzeichnet, dass** das ethylenische Monomer mit einer polaren Funktion 3 bis 20 Kohlenstoffatome, vorzugsweise 4 bis 8 Atome, umfasst.

10. Zusammensetzung nach einem der Ansprüche 7 bis 9, **dadurch gekennzeichnet, dass** das ethylenische Monomer mit einer polaren Funktion aus Vinylestern einer gesättigten Carbonsäure, ungesättigten Carbonsäuren oder (Meth)acrylsäureestern einer ungesättigten Carbonsäure ausgewählt ist.

11. Zusammensetzung nach einem der Ansprüche 7 bis 10, **dadurch gekennzeichnet, dass** die Zusammensetzung bis zu 10 Gew.-% Additive, insbesondere Antioxidantien, UV-Stabilisatoren, Schmiermittel, Antistatika, mineralische Füllstoffe, farbgebende Pigmente, Zeolithe und/oder "Antitropfmittel" (Produkte auf Basis von Silikon (PDMS) oder fluorierte Produkte wie PTFE) umfasst.

12. Zusammensetzung nach einem der Ansprüche 7 bis 11, **dadurch gekennzeichnet, dass** es sich bei dem flammhemmenden Mittel um einen mineralischen Füllstoff, insbesondere Aluminiumtrihydrat und/oder Magnesiumhydroxid, handelt.

13. Kabel oder Schlauch mit mindestens zwei Schichten, wovon mindestens eine Schicht durch die thermoplastische Zusammensetzung nach einem der Ansprüche 7 bis 12 gebildet ist.

## Claims

1. A coupling agent of a thermoplastic fire-retardant composition comprising a maleic anhydride-grafted polyethylene with a melting point of greater than 115°C (Celsius), **characterized in that** it also comprises an ethylene/acrylate/maleic anhydride terpolymer, the proportion of said terpolymer representing from 33% to 99.5% by weight of the mixture forming the coupling agent.

2. The coupling agent as claimed in claim 1, **characterized in that** the coupling agent consists of said maleic anhydride-grafted polyethylene and said ethylene/acrylate/maleic anhydride terpolymer.

3. The coupling agent as claimed in claim 1 or 2, **characterized in that** the proportion of the terpolymer represents from 34% to 67% by weight of the mixture.

4. The coupling agent as claimed in any one of the preceding claims, **characterized in that** the proportion of the terpolymer represents from 45% to 55% by weight of the mixture.

5. The coupling agent as claimed in any one of the preceding claims, **characterized in that** the abovementioned terpolymer is a terpolymer of ethylene, butyl acrylate and maleic anhydride.

6. The coupling agent as claimed in any one of the preceding claims, **characterized in that** the abovementioned maleic anhydride-grafted polyethylene is a linear low-density polyethylene.

7. A halogen-free fire-retardant thermoplastic composition, **characterized in that** it comprises, for at least 90% by weight of the composition:
- from 35% to 70% by weight of fire-retardant fillers,
- from 0% to 45% by weight of a copolymer of ethylene and of an ethylenic monomer bearing a polar function,
- from 0% to 45% of polyethylenes,
- at least one of the two components, said copolymer or said polyethylene, being present in the composition,
**characterized in that** said composition comprises between 0.1% and 10% of the coupling agent as claimed in any one of claims 1 to 6.

8. The composition as claimed in claim 7, **characterized in that** said coupling agent is present in the composition at between 2% and 7.5% by weight of the composition.

9. The composition as claimed in claim 7 or 8, **characterized in that** the ethylenic monomer bearing a polar function comprises from 3 to 20 carbon atoms, preferentially from 4 to 8 atoms.

10. The composition as claimed in one of claims 7 to 9, **characterized in that** the ethylenic monomer bearing a polar function is chosen from vinyl esters of a saturated carboxylic acid, unsaturated carboxylic acids or (meth)acrylic esters of an unsaturated carboxylic acid.

11. The composition as claimed in any one of claims 7 to 10, **characterized in that** the composition comprises up to 10% by weight of additives, in particular antioxidants, UV stabilizers, lubricants, antistatic agents, mineral fillers, coloring pigments, zeolites and/or "non-drip" agents (silicone-based products (PDMS) or fluoro products such as PTFE).

12. The composition as claimed in any one of claims 7 to 11, **characterized in that** the fire retardant is a mineral filler, in particular aluminum trihydrate and/or magnesium hydroxide.

13. A cable or tube having at least two layers, at least one of which is formed by the above-mentioned thermoplastic composition as claimed in any of claims 7 to 12.
